# EUROPEAN PATENT SPECIFICATION

(11) **EP 0 818 353 B1**
(45) Date of publication and mention of the grant of the patent: **21.11.2001**
(21) Application number: 97111085.3
(22) Date of filing: 03.07.1997
(51) Int. Cl.: B60Q 1/30, B60Q 7/00

(54) **Vehicle safety light assembly**
Warneinrichtung für Kraftfahrzeuge
Dispositif de signalisation de sécurité pour véhicule

(43) Date of publication of application: 14.01.1998
(73) Proprietor: HOWARD-LLOYDE ENTERPRISE CO., LTD., Taichung 40315 (TW)
(72) Inventor: Yang, Chang-An, Nei-Hu, Taipei (TW)
(74) Representative: Beil, Hans Christoph, Dr,

(56) References cited:
- EP-A- 0 683 067
- DE-U- 29 510 280
- DE-U- 29 515 472
- PATENT ABSTRACTS OF JAPAN vol. 7, no. 79 (M-204) [1224] , 31 March 1983 & JP 58 004648 A (YATAGAWA DENKI KOGYO KK), 11 January 1983

## Description

### BACKGROUND OF THE INVENTION

### 1. Field of the Invention

This invention relates to an improved vehicle safety light assembly.

### 2. Description of the Prior Art

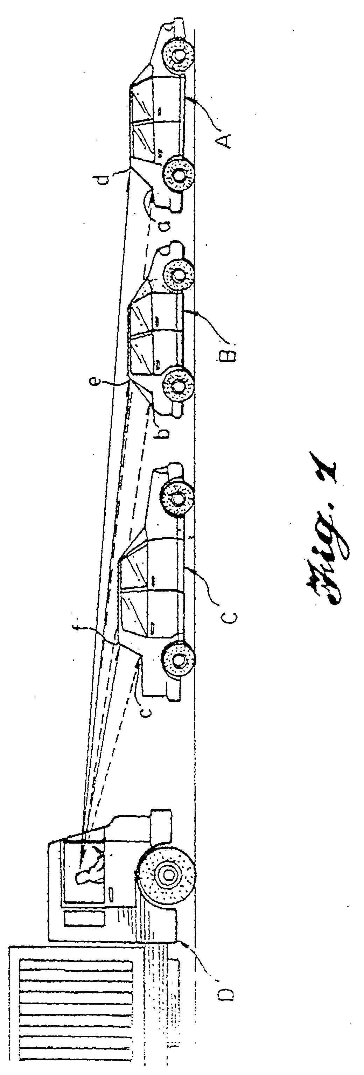

It has been found that rear end vehicular collisions are one of the most common accidents occurring on our road systems today and result in countless loss of money, time and sometimes, life to those involved. Although a number of systems have been proposed to alert trailing vehicle drivers of the deceleration of a lead vehicle prior to illumination of the brake lights, there remains a need for further improvement in this area. The addition of a third eye-level brake light in the rear window of presently manufactured automobiles has, no doubt, helped to reduce the number and severity of rear end collisions. However, as shown in FIG. 1, only the third brake light c of the automobile C can be seen by the driver of the trailing truck D. However, if the third brake lights a, b and c of the automobiles A, B and C are raised to the upper edge of the rear window, the third brake lights a, b and c will be all seen by the driver of the truck D thereby alerting the driver of the truck D of the deceleration of a number of leading automobiles.

Further, rear end collisions between on-coming traffic and disabled vehicles causes many deaths and injuries annually. Hence, it has heretofore been suggested that warning devices be provided that can be positioned on the roadway substantially in advance of a disabled vehicle to warn oncoming automobiles. Nevertheless, it will be very dangerous for one to get out of the vehicle and put a triangular warning sign behind the disabled vehicle in freeways.

The prior art document JP 58 004 648 A discloses a vehicle safety assembly comprising an elongated housing, a rail arranged within said housing, a folding means including a first rod X, a second rod Y pivotally connected with an end of said first rod X and a third rod Z, pivotally connected with another end of said first rod X, a first slider GP slidably engaged with said rail and pivotally connected with an outer end of said second rod Y and a second pin P being engaged with said rail and pivotally connected with an outer end of said third rod Z.

It is an object of the present invention to provide a vehicle safety light assembly which can obviate and mitigate the above-mentioned drawbacks.

In order to achieve this object the invention provides a vehicle safety light assembly comprising the features recited in independent claims 1, 2 and 3.

### SUMMARY OF THE INVENTION

This invention relates to an improved vehicle safety light assembly.

It is the primary object of the present invention to provide a vehicle safety light assembly which can be used as a third brake light as well as a triangular warning sign.

It is another object of the present invention to provide a vehicle safety light assembly which can reduce rear end collision incidence and severity.

It is still another object of the present invention to provide a vehicle safety light assembly which is easy to install by the novice mechanic or vehicle owner.

It is still another object of the present invention to provide a vehicle safety light assembly which is low in cost.

It is a further object of the present invention to provide a vehicle safety light assembly which is simple in construction.

### BRIEF DESCRIPTION OF THE DRAWINGS

FIG. 1 illustrates the third brake light of some automobiles, which cannot be seen by a trailing truck driver;
FIG. 2 illustrates an automobile equipped with a third brake light according to the present invention;
FIG. 3 illustrates an automobile equipped with a triangular warning sign according to the present invention;
FIG. 4 illustrates the present invention used as a third brake light within an automobile;
FIG. 5 illustrates the present invention used as a triangular warning sign within an automobile;
FIG. 6 is an exploded view of the present invention;
FIG. 7 illustrates conversion of the third brake light into a triangular warning sign;
FIG. 8 illustrates a second preferred embodiment of the present invention; and
FIG. 9 illustrates a third preferred embodiment of the present invention.

### DETAILED DESCRIPTION OF THE PREFERRED EMBODIMENT

For the purpose of promoting an understanding of the principles of the invention, reference will now be made to the embodiment illustrated in the drawings. Specific language will be used to describe same. It will, nevertheless, be understood that no limitation of the scope of the invention as claimed is thereby intended, such alterations and further modifications in the illustrated device, and such further applications as illustrated herein being contemplated as would normally occur to one skilled in the art to which the invention as disclosed in the claims relates.

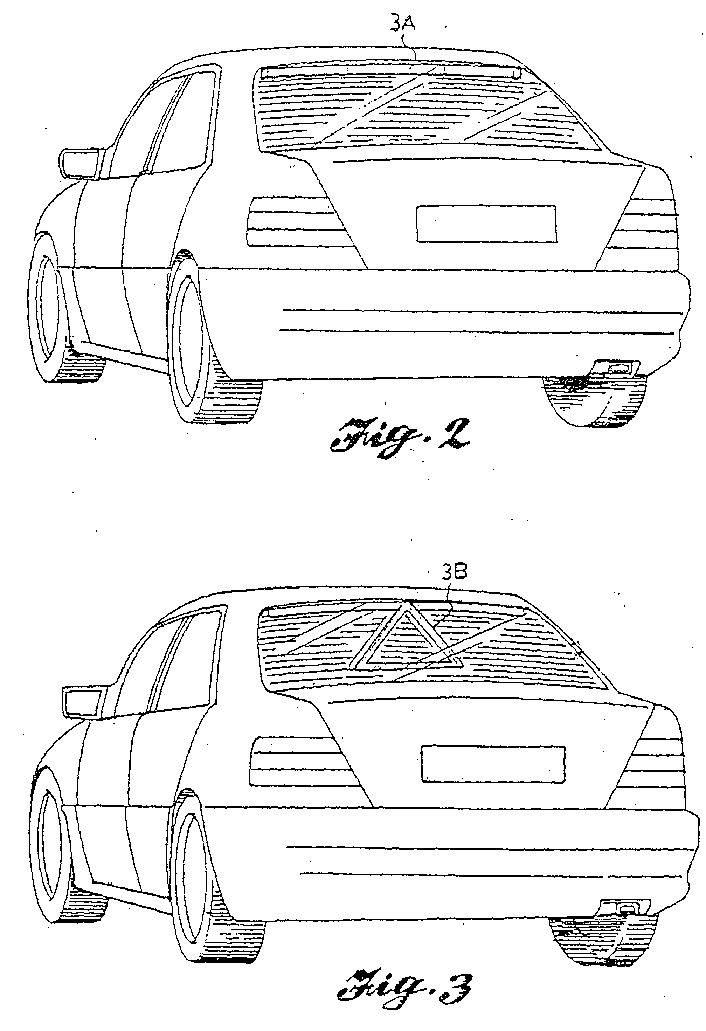

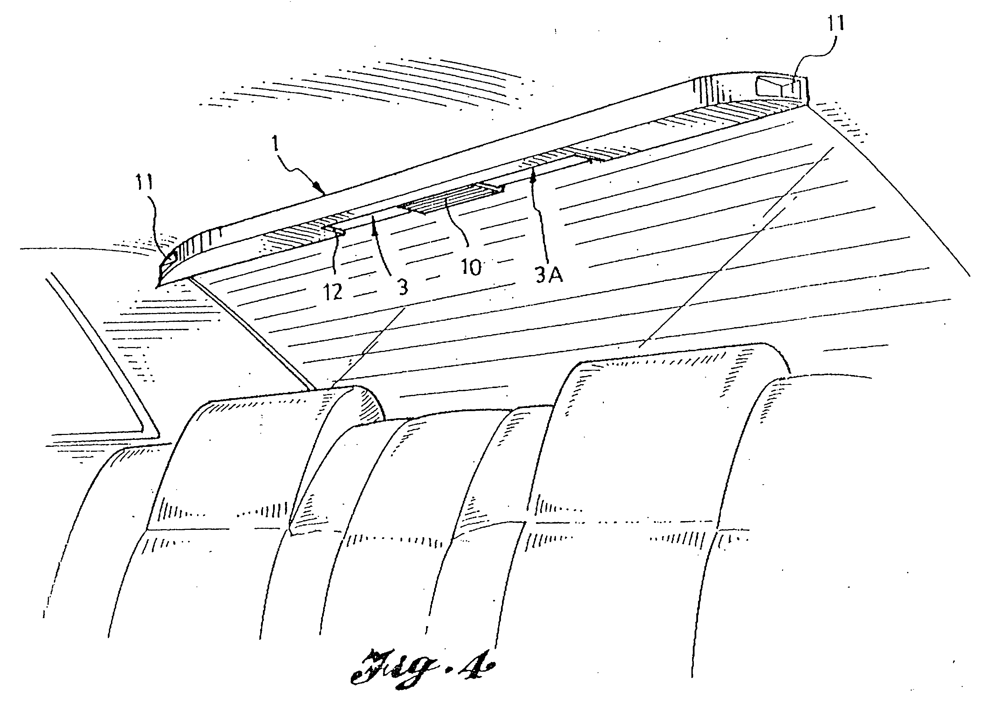

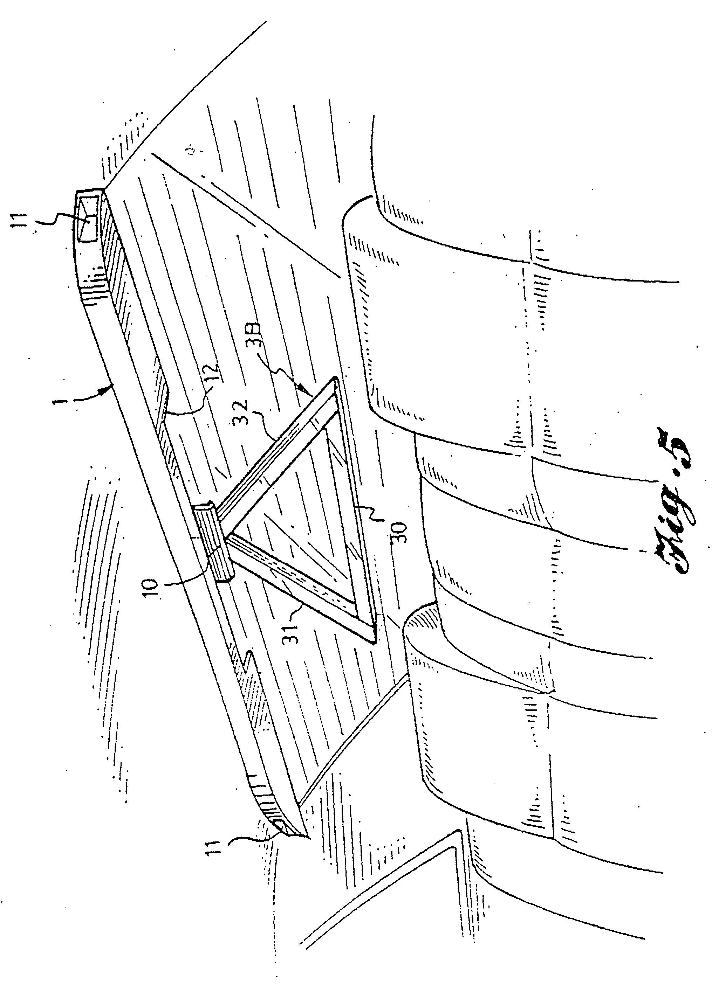

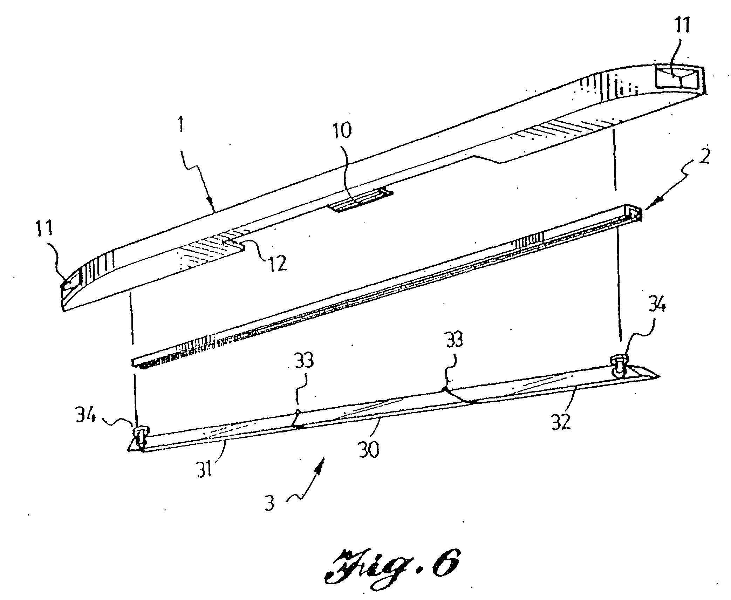

With reference to the drawings and in particular to FIGS. 2 and 4, the vehicle safety light assembly according to the present invention is mounted on the upper edge of the rear window of a vehicle and looks like an elongated lamp 3A. The vehicle safety light assembly can be converted into a triangular warning sign 3B (see FIGS. 3 and 5) by manual power or an electric motor.

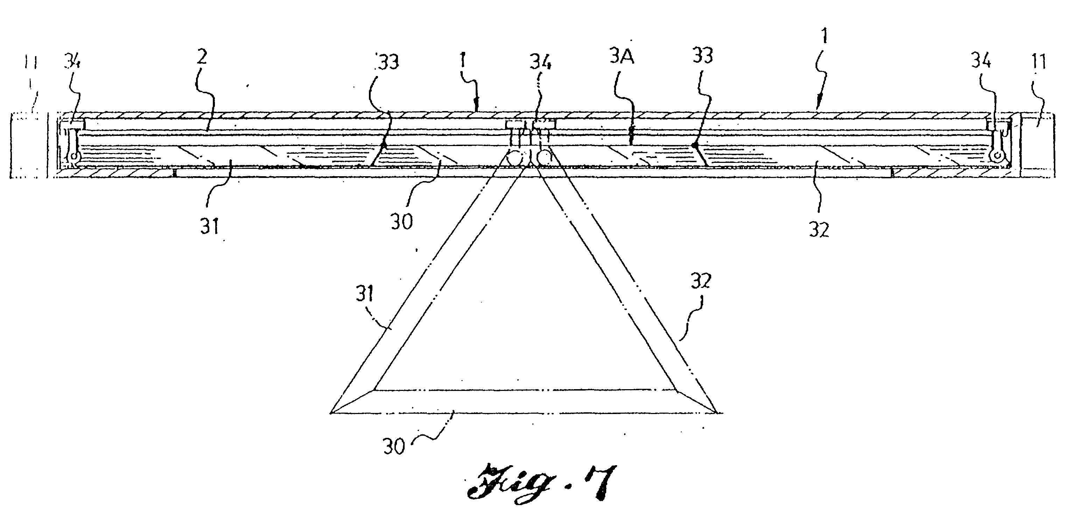

Referring to FIGS. 4, 6 and 7, the vehicle safety light assembly comprises an elongated housing 1 in which is fitted a folding lighting means 3. The elongated housing 1 is provided with a bracket 11 at both ends 11 so that it can be fixedly arranged on the upper edge of the rear window or the inner top of the vehicle. The lower side of the elongated housing 1 has a recess 12 in which is mounted a support member 10 for upholding the intermediate portion of the folding lighting means 3. The support member 10 is preferably made of resilient material. A rail 2 which has the same length as the folding lighting means 3 is installed within the elongated housing 1. The folding lighting means 3 including a first (intermediate) lamp 30, a second (left) lamp 31 having a right end connected with a left end of the intermediate lamp 30 by a pivot 33, and a third (right) lamp 32 having a left end connected with a right end of the intermediate lamp 30 by another pivot 33. The second lamp 31 and the third lamp 32 are each pivotally connected with a lower end of a slider 34. The upper end of the slider 34 is slidably engaged with the rail 2. Accordingly, when the sliders 34 are moved towards each other along the rail 2, the folding lighting means 3 will be converted into a triangular warning sign 3B.

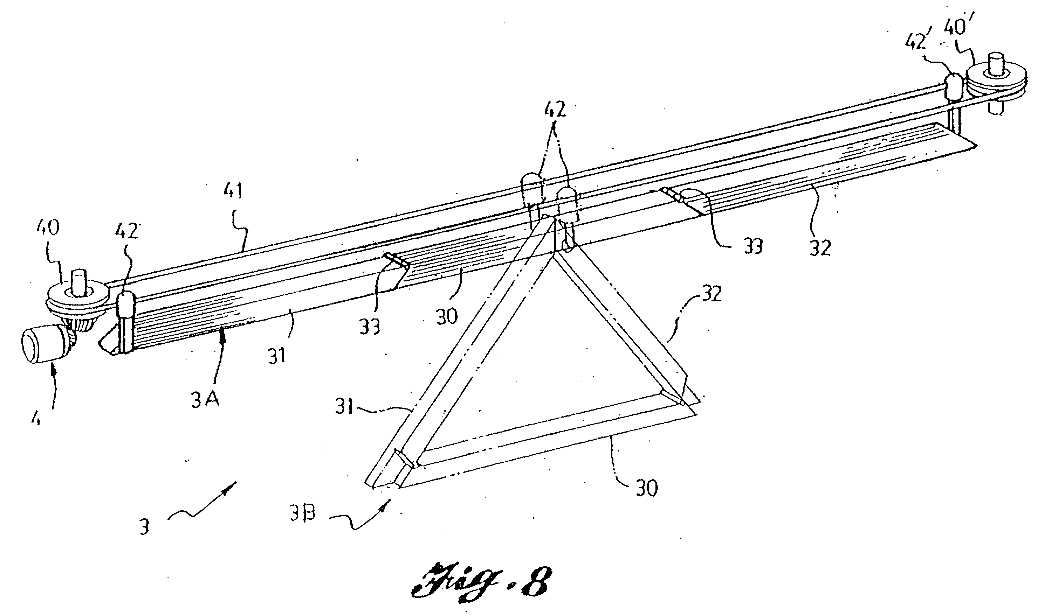

FIG. 7 illustrates how to convert the folding lighting means 3 into a triangular warning sign 3B. As shown, it is only necessary to pull down the intermediate lamp 30 so that the intermediate lamp 30 will disengage with the support member 10 and the sliders 34 of the left and right lamps 31 and 32 will go inwardly thereby forming a triangular warning sign. The sliders 34 may be provided with a magnet (not shown) or engaging means so as to make it easier to form the triangular warning sign.

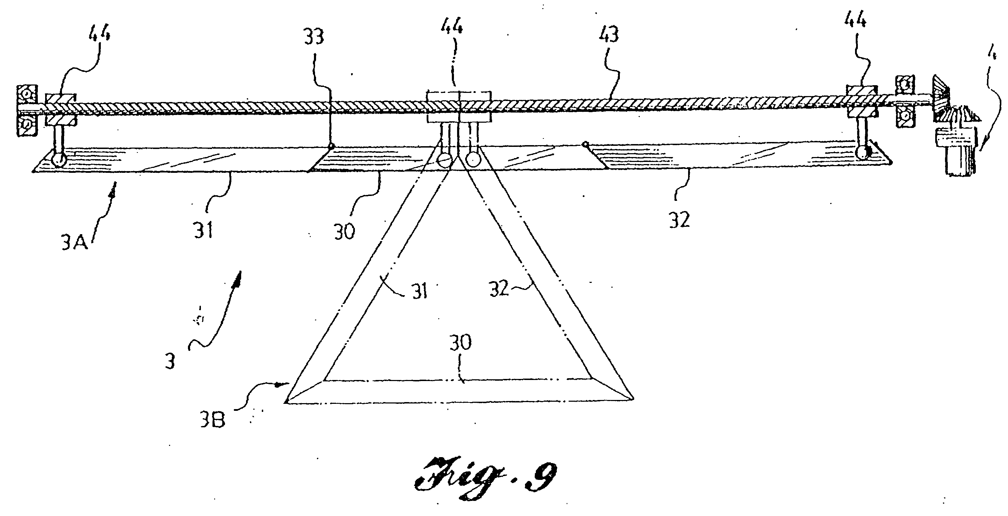

FIG. 8 shows another preferred embodiment of the present invention. As illustrated, the elongated housing 1 is provided with a first pulley 40 at the right end and a second pulley 40' one at the left end. The first pulley 40 is connected to the second pulleys 40' by a belt 41. The first pulley 40 is fixedly mounted on an output axle of an electric motor 4. The front side of the right end of the right lamp 32 is pivotally connected with the lower end of a slider 42. The upper end of the slider 42 is fixedly connected with the cable 41. The rear side of the left end of the left lamp 31 is pivotally connected with the lower end of a slider 42 and the upper end of the slider 42 is fixedly connected with the belt 41. Hence, when the electric motor 4 is turned on to pull the sliders 42 and 42' to move towards each other via the belt 41, the right end of the right lamp 32 and the left end of the left lamp 31 will be moved together thereby forming a triangular warning sign. On the contrary, when the electric motor 4 is turned on to rotate in a reverse direction, the sliders 42 and 42' will be moved away from each other thereby making the left lamp 31, the intermediate lamp 30 and the right lamp 32 align with one another and therefore forming a third brake light 3A.

FIG. 9 illustrates a third preferred embodiment of the present invention. As can be seen, the elongated housing 1 is provided with a lead screw 43 having left hand threads at one half and right hand threads at the other. The left end of the left lamp 31 and the right end of the right lamp 32 are each pivotally connected with a slider 44 which has internal threads engageable with the lead screw 43. The lead screw 43 is drivingly connected to an electric motor 4 via gears. Hence, when the electric motor 4 drives the sliders 44 towards each other, the left end of the left lamp 31 and the right end of the right lamp 32 will be moved together and the intermediate lamp 30 will be lowered thereby forming a triangular warning sign 3B. As the electric motor 4 rotates in an opposite direction, the left end of the left lamp 31 and the right end of the right lamp 32 will be moved away from each other thus aligning the left lamp 31, the intermediate lamp 30 and the right lamp 32 to form a third brake light 3A.

The invention is naturally not limited in any sense to the particular features specified in the forgoing or to the details of the particular embodiment which has been chosen in order to illustrate the invention. Consideration can be given to all kinds of variants of the particular embodiment which has been described by way of example without thereby departing from the scope of the claims.

## Claims

1. A vehicle safety light assembly comprising:
an elongated housing (1);
a rail (2) arranged within said elongated housing (1);
a folding lighting (3) means including a first lamp (30), a second (31) lamp pivotally connected with an end of said first lamp (30), and a third lamp (32) pivotally connected with another end of said first lamp (30);
a first slider (34) having an upper end slidably engaged with said rail (2) and a lower end pivotally connected with an outer end of said second lamp (31); and
a second slider (34) having an upper end slidably engaged with said rail (2) and a lower end pivotally connected with an outer end of said third (32) lamp.

2. A vehicle safety light assembly comprising:
an elongated housing (1);
a folding lighting means (3) including a first lamp (30), a second lamp (31) pivotally connected with an end of said first lamp (30), and a third (32) lamp pivotally connected with another end of said first lamp (30);
a first pulley (40) disposed at an outer end of said second lamp (31);
a second pulley (40') disposed at an outer end of said third lamp (32);
an electric motor having an output axle drivingly connected with said first pulley;
a belt (41) connecting said first pulley (40) to said second pulley (40');
a first slider (42') having an upper end fixedly mounted on said belt (41) and a lower end pivotally connected with an outer end of said third lamp (32); and
a second slider (42) having an upper end fixedly mounted on said belt (41) and a lower end pivotally connected with an outer end of said second lamp (31).

3. A vehicle safety light assembly comprising:
an elongated housing (1);
a folding lighting means (3) including a first lamp (30); a second lamp (31) pivotally connected with an end of said first lamp (30), and a third lamp (32) pivotally connected with another end of said first lamp (30);
a lead screw (43) disposed above said folding lighting means and having left hand threads at one half thereof and right hand threads at another half thereof;
an electric motor (4) drivingly connected with said lead screw (43);
a first slider (44) having an upper end threadedly engaged with said lead screw (43) and a lower end pivotally connected with an outer end of said third lamp (32); and
a second slider having an upper end threadedly engaged with said lead screw (43) and a lower end pivotally connected with an outer end of said second lamp (31).

## Patentansprüche

1. Eine Fahrzeugsicherheitslichtanordnung, umfassend
ein längliches Gehäuse (1);
eine Schiene (2), die innerhalb des länglichen Gehäuses (1) angeordnet ist;
eine faltbare Lichtanordnung (3), umfassend eine erste Lampe (30), eine zweite Lampe (31), drehbar verbunden mit einem Ende der ersten Lampe (30) und eine dritte Lampe (32), drehbar verbunden mit dem anderen Ende der ersten Lampe (30);
einen ersten Gleiter (34), dessen oberes Ende gleitbar mit der Schiene (2) verbunden ist und dessen unteres Ende drehbar mit einem äußeren Ende der zweiten Lampe (31) verbunden ist; und einen zweiten Gleiter (34), dessen oberes Ende gleitbar mit der Schiene (2) und dessen unteres Ende drehbar mit einem äußeren Ende der dritten Lampe (32) verbunden ist.

2. Eine Fahrzeugsicherheitslichtanordnung, umfassend:
ein längliches Gehäuse (1);
faltbare Lichtmittel (3), umfassend eine erste Lampe (30), eine zweite Lampe (31), die drehbar mit einem Ende der ersten Lampe (30) verbunden ist und eine dritte Lampe (32), die drehbar mit dem anderen Ende der ersten Lampe (30) verbunden ist;
einem ersten Antrieb (40), angeordnet an einem äußeren Ende der zweiten Lampe (31);
einem zweiten Antrieb (40'), der an einem äußeren Ende der genannten dritten Lampe (32) angeordnet ist;
einen Elektromotor, dessen Antriebsachse mit dem ersten Antrieb (40) verbunden ist; einen Riemen (41), der den ersten Antrieb (40) mit dem zweiten Antrieb (40-) verbindet; einen ersten Gleiter (42'), dessen oberes Ende fest verbunden mit dem Riemen (41) und dessen unteres Ende drehbar mit einem äußeren Ende der dritten Lampe (32) verbunden ist;
und einen zweiten Gleiter (42), der am oberen Ende fest mit dem Riemen (41) und am unteren Ende drehbar mit einem äußeren Ende der zweiten Lampe (31) verbunden ist.

3. Eine Fahrzeugsicherheitslichtanordnung, umfassend:
ein längliches Gehäuse (1);
faltbare Lichtmittel (3), umfassend eine erste Lampe (30), eine zweite Lampe (31), die drehbar mit einem Ende der ersten Lampe (30) verbunden ist, und eine dritte Lampe (32), die drehbar mit einem anderen Ende der ersten Lampe (30) verbunden ist;
eine Gewindestange (43), die über den faltbaren Lichtmitteln angebracht ist, und ein Linksgewinde auf der einen und ein Rechtsgewinde auf der anderen Hälfte aufweist; einen Elektromotor (4), der antreibend mit der Gewindestange (43) verbunden ist; einen ersten Gleiter (44), dessen oberes Ende gängig mit der Gewindestange 3 (43) und dessen unteres Ende drehbar mit einem äußeren Ende der dritten Lampe (32) verbunden ist; und
einen zweiten Gleiter, dessen oberes Ende gängig mit der Gewindestange (43) und dessen unteres Ende drehbar mit einem äußeren Ende der zweiten Lampe (31) verbunden ist.

## Revendications

1. Ensemble d'éclairage de sécurité pour véhicule, comprenant :
un boîtier allongé (1),
un rail (2) placé à l'intérieur du boîtier allongé (1),
un dispositif d'éclairage pliant (3) comprenant une première lampe (30), une seconde lampe (31) raccordée de manière pivotante à une extrémité de la première lampe (30), et une troisième lampe (32) raccordée de manière pivotante à l'autre extrémité de la première lampe (30),
un premier coulisseau (34) ayant une extrémité supérieure qui coopère par coulissement avec le rail (2) et une extrémité inférieure raccordée de manière pivotante à une extrémité externe de la seconde lampe (31), et
un second coulisseau (34) ayant une extrémité supérieure coopérant par coulissement avec le rail (2) et une extrémité inférieure raccordée de manière pivotante à une extrémité externe de la troisième lampe (32).

2. Ensemble d'éclairage de sécurité pour véhicule, comprenant :
un boîtier allongé (1),
un dispositif d'éclairage pliant (3) qui comporte une première lampe (30), une seconde lampe (31) raccordée de manière pivotante à une extrémité de la première lampe (30), et une troisième lampe (32) raccordée de manière pivotante à l'autre extrémité de la première lampe (30),
une première poulie (40) placée à une extrémité externe de la seconde lampe (31),
une seconde poulie (40') placée à une extrémité externe de la troisième lampe (32),
un moteur électrique ayant un axe de sortie raccordé à la première poulie afin qu'il l'entraîne,
une courroie (41) raccordant la première poulie (40) à la seconde poulie (40'),
un premier coulisseau (42') ayant une extrémité supérieure montée en position fixe sur la courroie (41) et une extrémité inférieure raccordée de manière pivotante à une extrémité externe de la troisième lampe (32), et
un second coulisseau (42) ayant une extrémité supérieure montée de façon fixe sur la courroie (41) et une extrémité inférieure raccordée de manière pivotante à une extrémité externe de la seconde lampe (31).

3. Ensemble d'éclairage de sécurité pour véhicule, comprenant :
un boîtier allongé (1),
un dispositif d'éclairage pliant (3) qui comporte une première lampe (30), une seconde lampe (31) raccordée de manière pivotante à une extrémité de la première lampe (30), et une troisième lampe (32) raccordée de manière pivotante à l'autre extrémité de la première lampe (30),
une vis-mère (43) placée au-dessus du dispositif d'éclairage pliant et ayant un pas à gauche dans une moitié et un pas à droite dans une autre moitié,
un moteur électrique (4) raccordé à la vis-mère (43) afin qu'il l'entraîne,
un premier coulisseau (44) ayant une extrémité supérieure coopérant par vissage avec la vis-mère (43) et une extrémité inférieure raccordée de manière pivotante à une extrémité externe de la troisième lampe (32), et
un second coulisseau ayant une extrémité supérieure coopérant par vissage avec la vis-mère (43) et une extrémité inférieure raccordée de manière pivotante à une extrémité externe de la seconde lampe (31).
